# EUROPÄISCHE PATENTSCHRIFT

(11) **EP 0 972 729 B1**
(45) Veröffentlichungstag und Bekanntmachung des Hinweises auf die Patenterteilung: **07.11.2001**
(21) Anmeldenummer: 99113105.3
(22) Anmeldetag: 07.07.1999
(51) Int. Cl.: B65G 47/90

(54) **Einrichtung zum Halten scheibenförmiger Kunststoffsubstrate**
Arrangement for holding disc-shaped plastic substrates
Dispositif pour maintenir des substrats en plastique et en forme de disque

(30) Priorität: 16.07.1998 DE 29812696 U
(43) Veröffentlichungstag der Anmeldung: 19.01.2000
(73) Patentinhaber: Convac Technologies GmbH, 75428 Illingen (DE)
(72) Erfinder: Zaiss, Roland, Fermont CA 94539 (US)
(74) Vertreter: Dreiss, Fuhlendorf, Steimle & Becker

(56) Entgegenhaltungen:
- US-A- 5 698 030

## Beschreibung

Die vorliegende Erfindung bezieht sich auf eine Einrichtung zum aufnehmbaren und ablegbaren Halten von vorzugsweise scheibenförmigen Kunststoffsubstraten, wie CDs, DVDs und dgl. Aufzeichnunsträger, nach dem Oberbegriff des Anspruchs 1.

Bei einer derartigen, bei der Bearbeitung von scheibenförmigen Kunststoffsubstraten verwendeten Einrichtung besitzt die Trägereinheit eine plattenförmige Maske, an deren Unterseite ein Zapfen vorsteht, an dessen Umfang mindestens ein Paar einander gegenüberliegender federnd gelagerter Rastkugeln angeordnet ist (US 5698030). Der Abstand dieser Kugeln zur Unterseite der Maske ist gleich der oder größer als die Dicke der zu behandelnden Kunststoffsubstrate. Bei dieser bekannten Einrichtung wird also der Zapfen der Trägereinheit in das mittige Loch des Kunststoffsubstrats gesteckt, so daß das Kunststoffsubstrat hinter die federnd gelagerten Kugeln rasten kann. Beim Transport des Kunststoffsubstrats von einer Aufnahmestation zu einer Übergabestation wird die das Kunststoffsubstrat haltende plattenförmige Maske mit Hilfe eines an einer in der horizontalen Ebene verschwenkbaren Transportarmes angeordneten Elektromagneten mit dem Kunststoffsubstrat nach unten hängend gehalten. An der Übergabestation zu einer Behandlungsvorrichtung wird das mit der plattenförmigen Maske versehene Kunststoffsubstrat nach Abschalten des Elektromagneten von einer Vakuumhaltevorrichtung übernommen. Das Abnehmen des Kunststoffsubstrats von der wieder von einem Elektromagneten gehaltenen plattenförmigen Maske erfolgt durch Abziehen mittels Vakuum. Da diese bekannte Einrichtung am Transportarm Elektromagnete und an der die plattenförmige Maske aufweisenden Trägereinheit federnd gelagerte Rastkugeln benötigt, ist diese Einrichtung relativ aufwendig in ihrem Aufbau und daher nur für solche Transportvorrichtungen geeignet, die wie der vorgenannte Schwenkarm nur zwei Transportplätze bietet.

Aufgabe der vorliegenden Erfindung ist es, eine Einrichtung zum aufnehmbaren und ablegbaren Halten von vorzugsweise scheibenförmigen Kunststoffsubstraten der eingangs genannten Art zu schaffen, die in einfacherer Weise aufgebaut ist und sich insbesondere für solche Transportvorrichtungen eignet, die mit mehreren Transportplätzen ausgestattet sind und die Kunststoffsubstrate in einer zur horizontalen Ebene verschiedenen Ebene bewegt.

Zur Lösung dieser Aufgabe sind bei einer Einrichtung zum aufnehmbaren und ablegbaren Halten von vorzugsweise scheibenförmigen Kunststoffsubstraten der eingangs genannten Art die im Anspruch 1 angegebenen Merkmale vorgesehen.

Durch die erfindungsgemäßen Maßnahmen ist erreicht, daß die scheibenförmigen Kunststoffsubstrate in wesentlich einfacherer Weise und unabhängig von der Lage der Haltevorrichtung im Raum gehalten werden können. So ist das Halten der Kunststoffsubstrate ohne weitere Maßnahmen zusammen mit dem Halten der Trägereinheit an der Haltevorrichtung erreicht. Dabei ist gewährleistet, daß bei der Aufnahme des Kunststoffsubstrats auf der Trägereinheit das Kunststoffsubstrat unbeansprucht und damit unbelastet ist. Die erfindungsgemäßen Maßnahmen sind insbesondere bei Einrichtungen zum der Kühlung der zuvor im Spritzgießverfahren hergestellten Kunststoffsubstrate dienenden Transportieren von Vorteil. Dabei sind eine Vielzahl von Transportplätzen vorhanden, die in einfacher Weise zur steckbaren und lösbar gehaltenen Aufnahme ausgebildet sind, wobei diesen mit einer Haltevorrichtung ausgestatteten Transportplätzen weder elektrische Energie noch Vakuum oder dgl. zugeführt werden muß. Dies macht das Halten der Kunststoffsubstrate konstruktiv besonders einfach. Desweiteren ist gewährleistet, daß nicht nur bei der Aufnahme des Kunststoffsubstrats durch die Haltevorrichtung sondern auch bei dem Abziehen des Kunststoffsubstrats von der Haltevorrichtung bzw. dessen Ablage auf die Ablagevorrichtung das Kunststoffsubstrat selbst unbeansprucht und damit unbelastet bleibt.

Das steckbare und lösbare Halten der Trägereinheit an der Haltevorrichtung kann bspw. durch mechanische Rastmittel erfolgen. Gemäß einem bevorzugten Ausführungsbeispiel vorliegender Erfindung sind jedoch zur permanentmagnetischen Halterung die Merkmale gemäß Anspruch 2 vorgesehen. Eine vorteilhafte konstruktive Ausgestaltung ergibt sich hierbei durch die Merkmale gemäß Anspruch 3 und/oder 4.

Mit den Merkmalen gemäß Anspruch 5 ist erreicht, daß das zum Abziehen des Kunststoffsubstrats von der Haltevorrichtung 15 erforderliche Vakuum ohne weitere Verbindungsbohrungen an die Unterseite des Grundkörpers der Trägereinheit angelegt werden kann. Auch durch diese Maßnahme ist erreicht, daß beim Entfernen des Kunststoffsubstrats von der Haltevorrichtung eine unmittelbare Belastung des Kunststoffsubstrats nicht erfolgt, weil vom Vakuum nicht das Kunststoffsubstrat sondern die Trägereinheit festgehalten und von der Haltevorrichtung getrennt wird.

Sind die Merkmale gemäß Anspruch 6 vorgesehen, so liegt das Kunststoffsubstrat nicht nur auf dem Grundkörper der Trägereinheit sondern auch auf der Aufnahme- und/oder Ablagevorrichtung unmittelbar auf.

Zum Aufnehmen bzw. Ablegen des Kunststoffsubstrats wird gemäß den Merkmalen des Anspruchs 7 die Aufnahme- und/oder Ablagevorrichtung zur Haltevorrichtung hin bewegt. Dabei ist es zweckmäßig die Merkmale gemäß Anspruch 8 vorzusehen, um eine möglicherweise auftretende Kraft auf die Haltevorrichtung auf ein Minimum zu begrenzen.

Zur Verwendung der Einrichtung insbesondere bei einer solchen zum Kühlen von scheibenförmigen Kunststoffsubstraten unmittelbar nach deren Spritzgießen sind die Merkmale gemäß Anspruch 9 vorgesehen, so daß die Kunststoffsubstrate während eines beim Ausführungsbeispiel vollständigen Umlaufs der Rotationseinheit abgekühlt werden können. Außerdem ergibt sich dadurch eine in der horizontalen Ebene platzsparende Anordnung, die darüberhinaus unter Vermeidung von Wärmestaus zu einer verbesserten Kühlung führt. Dabei ist es zweckmäßig, gemäß den Merkmalen des Anspruchs 10 die Aufnahme- und Ablagevorrichtung an zwei getrennten Stationen vorzusehen. Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figur 1: in schematischer geschnittener und ausschnittsweiser Darstellung eine Einrichtung zum aufnehmbaren und ablegbaren Halten von scheibenförmigen Kunststoffsubstraten gemäß einem bevorzugten Ausführungsbeispiel vorliegender Erfindung, in einer Ausgangsstellung,
- Figur 2: eine der Figur 1 entsprechende Darstellung, jedoch in einer Übergabestellung,
- Figur 3: in verkleinerter und erweiterter Darstellung die Einrichtung nach den Figuren 1 und 2, jedoch in einer Stellung zur Aufnahme eines Kunststoffsubstrats, und
- Figur 4: eine der Figur 3 entsprechende Darstellung bei aufgenommenem Kunststoffsubstrat.

Die in der Zeichnung dargestellte Einrichtung 10 dient zum aufnehmbaren und ablegbaren Halten von scheibenförmigen Kunststoffsubstraten 11, wie CDs, DVDs und dgl. Aufzeichnungsträger, wobei die Einrichtung 10 insbesondere dort von Vorteil ist, wo sie zum Kühlen derartiger zuvor im Spritzgießverfahren hergestellter scheibenförmiger Kunststoffsubstrate 11 eingesetzt wird.

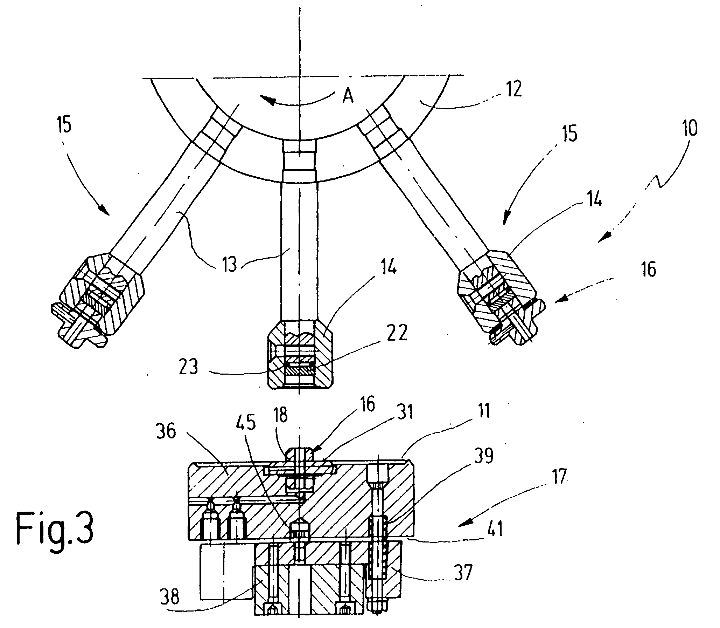

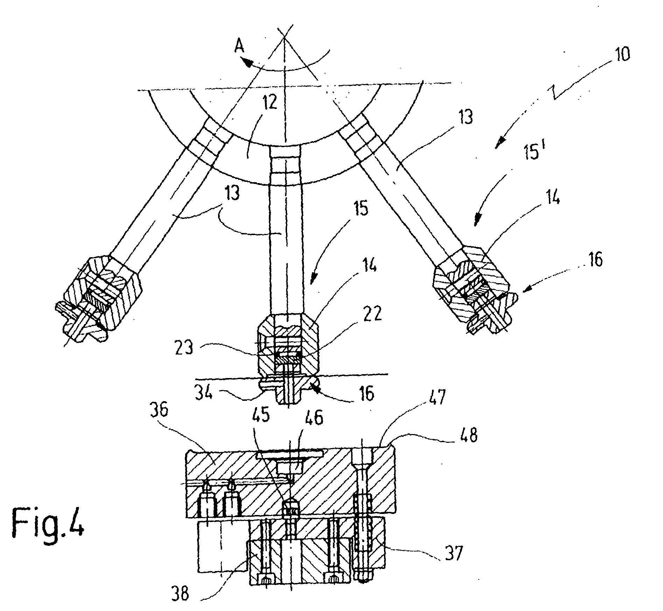

Gemäß den Figuren 3 und 4 besitzt die Einrichtung 10 eine rotierend bspw. in Richtung des Pfeiles A angetriebene, mit horizontaler Drehachse versehene Nabe 12, an der radial abstehende Haltevorrichtungen 15 gehalten sind, von denen jede eine Speiche bzw. einen Arm 13 und einen endseitig daran befestigten Aufnahmekopf 14 besitzt. Die Arme 13 sind über den Umfang der Nabe 12 in gleichmäßigem winkligen Abstand voneinander angeordnet. Jeder Aufnahmekopf 14 ist mit einer Trägereinheit 16 für ein scheibenförmiges Kunststoffsubstrat 11 lösbar bestückbar. Dazu besitzt der am Arm 13 befestigte Aufnahmekopf 14 innerhalb einer axialen Ausnehmung 21 einen axial gehaltenen Permanentmagneten 22, der sich rückseitig an einem O-Ring 23 abstützt.

Die Einrichtung 10 besitzt ferner eine Aufnahmevorrichtung 17 zum Aufnehmen eines scheibenförmigen Kunststoffsubstrats 11 mittels des Aufnahmekopfes 14 der Haltevorrichtung 15. Die Aufnahmevorrichtung 17 ist gemäß Doppelpfeil B gegenüber der betreffenden Haltevorrichtung 15 auf und ab bewegbar. Wie später noch zu beschreiben sein wird, dient die Aufnahmevorrichtung 17 als eine Station zum aufeinanderfolgenden Aufnehmen eines scheibenförmigen Kunststoffsubstrats durch die sich an dieser Station rotatorisch vorbeibewegenden Haltevorrichtungen 15 der Einrichtung 10. Eine weitere Station dient zum aufeinanderfolgenden Ablegen der während eines vollständigen oder Teilumlaufes der Nabe 12 abgekühlten scheibenförmigen Kunststoffsubstrate 11. Beim Ausführungsbeispiel sind Aufnahmestation und Ablagestation identisch.

Die Trägereinheit 16 besitzt einen scheibenförmigen Grundkörper 26, der mit zwei gegeneinander gerichteten, koaxialen zylindrischen Vorsprüngen 27 und 28 mit hier gleichem Durchmesser und gleicher Länge bestückt ist. Die Trägereinheit 16 besitzt eine axiale Durchgangsgewindebohrung 29, in der ein Außengewindebolzen 33 als Eisenkern eingebracht ist, der durch eine radiale Madenschraube fixiert ist, die in eine radiale Gewindebohrung 30 eingeschraubt ist. Die rotationssymmetrische Trägereinheit 16 ist in beiden 180°-Lagen verwendbar.

Die Aufnahmevorrichtung 17 besteht im wesentlichen aus einem Auflagekörper 36, einer Druckplatte 37 und einem Spannklotz 38. Am Spannklotz 38, der mit der Druckplatte 37 fest verbunden ist, greift in nicht dargestellter Weise eine die Bewegung gemäß Doppelpfeil B ausführende bspw. pneumatische Kolbenzylindereinheit an. Die Druckplatte 37 ist in einem geringen Abstand von der Unterseite des Auflagekörpers 36 durch mehrere Druckfedern 39 nachgiebig bewegbar gehalten. Der sich dadurch ergebende Federweg 41 zwischen Druckplatte 37 und Auflagekörper 36 ist wenige Millimeter, bspw. 2 mm groß. Die Druckfeder 39 umgeben eine Bolzenverbindung 42 und stützen sich über Paßscheiben 40 an Schultern 43 und 44 der betreffenden Bohrungen ab. Die Zentrierung zwischen Druckplatte 37 und Auflagekörper 36 erfolgt mittels einer Zentrierschraubenanordnung 45.

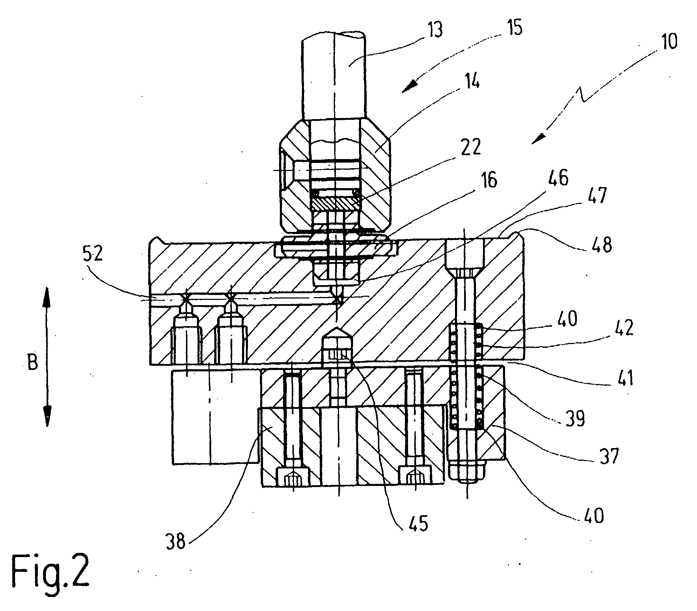

Der Auflagekörper 36 besitzt an seiner der Druckplatte 37 abgewandten oberen Seite eine zentrische, mit gestuften koaxialen Teilen versehene Aufnahmebohrung 46, in die der zylindrische Vorsprung 28 bzw. der scheibenförmige Grundkörper 26 paßt. Die Aufnahmebohrung 46 geht von einer durchmessergrößeren Vertiefung 47 aus, die umfangsrandseitig von einer ringförmigen Auflage 48 für das scheibenförmige Kunststoffsubstrat 11 umgrenzt ist. Die Auflagefläche der ringförmigen Auflage 48 ist coplanar mit der oberen Auflagefläche 31 des scheibenförmigen Grundkörpers 26 bei der eingesetzten Stellung nach Figur 2. Die Aufnahmebohrung 46 ist an ihrem inneren Ende mit einer Verbindungsbohrung 51 versehen, die in eine oder mehrere radiale Bohrungen 52 mündet, die in nicht dargestellter Weise mit einer Vakuumvorrichtung verbunden ist bzw. sind. In der in Figur 2 dargestellten Position der Trägereinheit 16 liegt die Unterseite 34 des scheibenförmigen Grundkörpers 26 auf einer Ringschulter 53 des ersten Bohrungsteils der Aufnahmebohrung 46 auf. Der daran anschließende Bohrungsteil nimmt den unteren zylindrischen Vorsprung 28 mit radialem Spiel (bspw. 0,5 mm) auf. Zwischen der Ringschulter 53 und der Aufnahmebohrung 46 besteht eine Vertiefung, durch die und das genannte radiale Spiel das Vakuum von den Bohrungen 52 und 51 an eine freie Ringfläche (Vakuumangriffsfläche) der Unterseite 34 der Trägereinheit 16 angelegt werden kann.

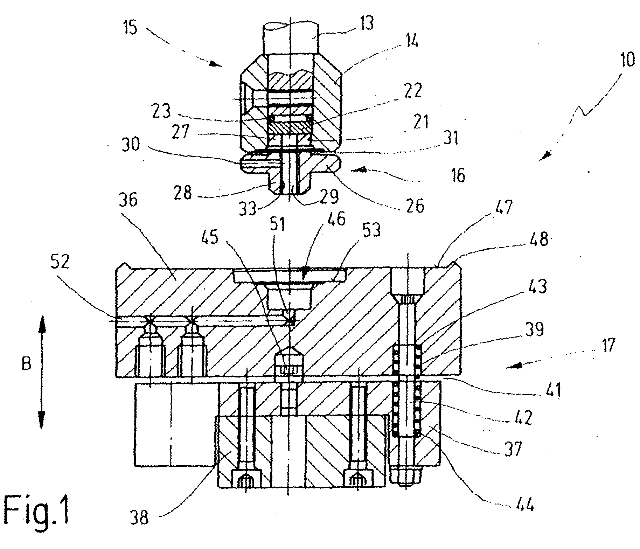

Gemäß Figur 1 ist in einer Ausgangsposition eine Trägereinheit 16 im Aufnahmekopf 14 permanentmagnetisch durch den Permanentmagnet 22 und den Eisenkern 33 lösbar gehalten. In dieser Position besitzt die Auflagefläche 31 des scheibenförmigen Grundkörpers 26 der Trägereinheit 16 einen etwa der Dicke des Substrats 11 entsprechenden Abstand von der Unterseite des Aufnahmekopfs 14. Zum Erreichen der in Figur 2 dargestellten Übergabestellung wird die Aufnahmevorrichtung 17 gemäß Doppelpfeil B nach oben derart bewegt, daß die Trägereinheit 16 in der Aufnahmebohrung 46 das Auflagekörpers 36 aufgenommen wird. In dieser Stellung wird an die Unterseite 34 der Trägereinheit 16 Vakuum angelegt, so daß die Trägereinheit 16 auf diese Weise vom Permanentmagneten 22 getrennt wird und so in der Aufnahmebohrung 46 des Auflagekörpers 36 festgehalten wird bzw. verbleibt. Während der Wirkung des Vakuums wird die Aufnahmevorrichtung 17 wieder axial nach unten bewegt.

Danach wird auf den Auflagekörper 36 über eine nicht dargestellte Zuführung ein mit einem mittigen Loch 18 versehenes Substrat 11 gelegt, wie dies aus Figur 3 ersichtlich ist. Das während eines nicht dargestellten Prozesses hergestellte scheibenförmige Kunststoffsubstrat liegt auf dem scheibenförmigen Grundkörper 26 und der ringförmigen Auflage 48 und ist durch den zylindrischen Vorsprung 27, dessen Außendurchmesser etwa dem Innendurchmesser des Lochs 18 entspricht, radial gehalten.

Danach kann durch Anheben der Aufnahmevorrichtung 17 die mit dem Substrat 11 versehene Trägereinheit 16 wieder der Haltevorrichtung 15 zugeführt werden, da ohne Vakuum die Trägereinheit 16 am Permanentmagneten 22 hängen bleibt. Die Aufnahmevorrichtung 17 wird dann wieder nach unten bewegt, welche Betriebsstellung in Figur 4 dargestellt ist.

Bei der Bewegung der Aufnahmevorrichtung 17 nach oben zum Aufnahmkopf 14 hin ist durch die federnde Verbindung zwischen Spannklotz 38 bzw. Druckplatte 37 und Auflagekörper 36 ein gepuffertes Anlegen erreicht und damit minimales Kräftebeaufschlagen von Trägereinheit 16 und Aufnahmekopf 14 bzw. der gesamten Haltevorrichtung 15 gegeben.

Nach der Aufnahme eines Substrats 11 gemäß Figur 4 wird die Nabe 12 um einen Schritt gemäß Pfeil A weiterbewegt, so daß mit der folgenden Haltevorrichtung 15' in der soeben beschriebenen Weise ein Substrat 11 aufgenommen werden kann. Die schrittweise Rotationsbewegung der Substrate 11 ermöglicht bspw. ein Abkühlen der Substrate 11, wobei die Kühldauer vom Ort der nachfolgenden Ablagestation abhängig ist. Bspw. kann die Ablagestation für die abgekühlten Substrate 11 nach einer vollständigen oder einer nahezu vollständigen Umdrehung erfolgen. Von dieser Ablagestation werden die so abgekühlten Substrate dann zur weiteren Bearbeitung abtransportiert.

## Patentansprüche

1. Einrichtung (10) zum aufnehmbaren und ablegbaren Halten von vorzugsweise scheibenförmigen Kunststoffsubstraten (11), wie CDs, DVDs und dgl. Aufzeichnungsträger, mit einer Haltevorrichtung (15), an der mindestens eine Trägereinheit (16) für das Kunststoffsubstrat (11) gehalten ist, und mit einer Aufnahme- und/oder Ablagevorrichtung (17), von der das Kunststoffsubstrat (11) aufnehmbar bzw. auf das es ablegbar ist, **dadurch gekennzeichnet, daß** die Trägereinheit (16) einen scheibenförmigen Grundkörper (26) besitzt, der an seiner der Haltevorrichtung (15) zugewandten Seite einen zylindrischen Vorsprung (27) trägt, über den das scheibenförmige Kunststoffsubstrat (11) legbar und der in eine Ausnehmung (21) der Haltevorrichtung (15) steckbar und lösbar mechanisch oder permanentmagnetisch gehalten ist.

2. Einrichtung nach dem Anspruch 1, **dadurch gekennzeichnet, daß** die Trägereinheit (16) aus der Haltevorrichtung (15) mittels einer in der Aufnahme-und/oder Ablagevorrichtung (17) angeordneten, zuschaltbaren Vakuumvorrichtung abziehbar ist.

3. Einrichtung nach Anspruch 2, **dadurch gekennzeichnet, daß** in der Ausnehmung (21) der Haltevorrichtung (15) eine Permanentmagnetscheibe (22) angeordnet und die Trägereinheit (16) zumindest teilweise magnetmetallisch ist.

4. Einrichtung nach Anspruch 3, **dadurch gekennzeichnet, daß** die Trägereinheit (16) eine einen Metallbolzen (33) aufnehmende axiale Durchgangsbohrung (29) aufweist.

5. Einrichtung nach einem der vorhergehenden Ansprüche, **dadurch gekennzeichnet, daß** der scheibenförmige Grundkörper (26) der Trägereinheit (16) mit einem in die Vertiefung (46) der Aufnahme- und/oder Ablagevorrichtung (17) zentrierend und mit Spiel eintauchenden zweiten zylindrischen Vorsprung (28) versehen ist.

6. Einrichtung nach einem der vorhergehenden Ansprüche, **dadurch gekennzeichnet, daß** der scheibenförmige Grundkörper (26) der Trägereinheit (16) in eine Vertiefung (46, 47) der Aufnahme- und/oder Ablagevorrichtung (17) oberflächenbündig einsetzbar ist.

7. Einrichtung nach mindestens einem der vorhergehenden Ansprüche, **dadurch gekennzeichnet, daß** die Aufnahme-und/oder Ablagevorrichtung (17) zur Haltevorrichtung (15) hin bewegbar ist.

8. Einrichtung nach Anspruch 7, **dadurch gekennzeichnet, daß** die Aufnahme- und/oder Ablagevorrichtung (17) eine den scheibenförmigen Grundkörper (26) und das scheibenförmige Kunststoffsubstrat (11) aufnehmende Auflage (36) und eine mit dem Hubantrieb verbundene Druckplatte (37) aufweist und daß die Druckplatte (37) durch Druckfedermittel (39) gegenüber der Auflage (36) auf Abstand gehalten ist.

9. Einrichtung nach mindestens einem der vorhergehenden Ansprüche, **dadurch gekennzeichnet, daß** die Haltevorrichtung (15) durch eine mit mehreren radialen Armen (13) und horizontaler Drehachse versehene Rotationseinheit (12) gebildet ist und daß an jedem Arm (13) eine Trägereinheit (16) aufnehmbar ist.

10. Einrichtung nach Anspruch 9, **dadurch gekennzeichnet, daß** der Rotationseinheit (12) eine Aufnahmestation (17) und eine in Rotationsrichtung nach vorzugsweise einer vollen Umdrehung folgende Ablagestation zugeordnet ist.

## Claims

1. Apparatus (10) for receivably and depositably holding preferably disc-shaped plastics substrates (11) such as CDs, DVDs and the like recording carriers, comprising a holding device (15) to which at least one carrier unit (16) for the plastics substrate (11) is held, and a receiving and/or deposit device (17) from which the plastics substrate (11) can be received or on which it can be deposited, **characterised in that** the carrier unit (16) has a disc-shaped main body (26) which at its side towards the holding device (15) has a cylindrical projection (27) over which the disc-shaped plastics substrate (11) can be laid and which can be fitted into an opening (21) in the holding device (15) and releasably mechanically or permanent-magnetically held.

2. Apparatus according to claim 1 **characterised in that** the carrier unit (16) can be removed from the holding device (15) by means of a vacuum apparatus which is arranged in the receiving and/or deposit device (17) and which can be switched on.

3. Apparatus according to claim 2 **characterised in that** a permanent magnet disc (22) is arranged in the opening (21) of the holding device (15) and the carrier unit (16) is at least partially magnet-metallic.

4. Apparatus according to claim 3 **characterised in that** the carrier unit (16) has an axial through bore (29) which accommodates a metal pin (33).

5. Apparatus according to one of the preceding claims **characterised in that** the disc-shaped main body (26) of the carrier unit (16) is provided with a second cylindrical projection (28) which engages centeringly and with play into the recess (46) of the receiving and/or deposit device (17).

6. Apparatus according to one of the preceding claims **characterised in that** the disc-shaped main body (26) of the carrier unit (16) can be fitted in flush-surface relationship into a recess (46, 47) of the receiving and/or deposit device (17).

7. Apparatus according to at least one of the preceding claims **characterised in that** the receiving and/or deposit device (17) is movable towards the holding device (15).

8. Apparatus according to claim 7 **characterised in that** the receiving and/or deposit device (17) has a support (36) which receives the disc-shaped main body (26) and the disc-shaped plastics substrate (11) and a pressure plate (37) connected to the stroke-producing drive, and that the pressure plate (37) is held at a spacing with respect to the support (36) by compression spring means (39).

9. Apparatus according to at least one of the preceding claims **characterised in that** the holding device (15) is formed by a rotary unit (12) provided with a plurality of radial arms (13) and a horizontal axis of rotation, and that a carrier unit (16) can be accommodated at each arm (13).

10. Apparatus according to claim 9 **characterised in that** associated with the rotary unit (12) are a receiving station (17) and a deposit station which follows in the direction of rotation after preferably a full revolution.

## Revendications

1. Dispositif (10) de logement et de dépôt de substrats en matière plastique (11) de préférence en forme de disque tels que des CD, des DVD et des supports d'enregistrement similaires, comprenant un dispositif de maintien (15) sur lequel au moins une unité de support (16) pour le substrat en matière plastique (11) est maintenue, et un dispositif de logement et/ou de dépôt (17) dans lequel le substrat en matière plastique (11) peut être logé ou sur lequel il peut être déposé, **caractérisé en ce que** l'unité de support (16) présente un corps de base (26) en forme de disque portant sur sa face orientée vers le dispositif de maintien (15) une saillie cylindrique (27) par l'intermédiaire de laquelle le substrat (11) en matière plastique en forme de disque peut être déposé et qui est maintenue dans un creux (22) du dispositif de maintien (15) de façon enfichable ou amovible par des moyens mécaniques ou par aimants permanents.

2. Dispositif selon la revendication 1, **caractérisé en ce que** l'unité de support (16) peut être retirée du dispositif de maintien (15) à l'aide d'un dispositif à vide pouvant être mis en circuit disposé dans le dispositif de logement et/ou de dépôt (17).

3. Dispositif selon la revendication 2, **caractérisé en ce que** dans le creux (21) du dispositif de maintien (15) est déposé un disque à aimants permanents (22) et que l'unité de support (16) est au moins partiellement magnéto-métallique.

4. Dispositif selon la revendication 3, **caractérisé en ce que** l'unité de support (16) présente un trou traversant axial (29) recevant un boulon métallique (33).

5. Dispositif selon l'une des revendications précédentes, **caractérisé en ce que** le corps de base (26) en forme de disque de l'unité de support (16) est pourvu d'une deuxième saillie cylindrique (28) centrée dans l'évidemment (46) du dispositif de logement et/ou de dépôt (17) et y plongeant avec un jeu.

6. Dispositif selon l'une des revendications précédentes, **caractérisé en ce que** le corps de base (26) en forme de disque de l'unité de support (16) peut être inséré à contact affleurant dans un évidemment (46, 47) du dispositif de logement et/ou de dépôt (17).

7. Dispositif selon au moins l'une des revendications précédentes, **caractérisé en ce que** le dispositif de logement et/ou de dépôt (17) peut être déplacé en direction du dispositif de maintien (15).

8. Dispositif selon la revendication 7, **caractérisé en ce que** le dispositif de logement et/ou de dépôt (17) présente une assise (36) recevant le corps de base (26) en forme de disque et le substrat (11) en matière plastique en forme de disque (11), et une plaque de pression (37) solidaire de l'entraînement de la course, et que la plaque de pression (37) est tenue à distance de l'assise (36) par l'intermédiaire de moyens de pression élastiques (39).

9. Dispositif selon au moins l'une des revendications précédentes, **caractérisé en ce que** le dispositif de maintien (15) est constitué par une unité de rotation (12) pourvue de plusieurs bras radiaux (13) et par un axe de pivotement horizontal, et que chaque bras (13) peut recevoir une unité de support (16).

10. Dispositif selon la revendication 9, **caractérisé en ce qu'**à l'unité de rotation (12) est associée une station de logement (17) suivie, dans le sens de rotation, de préférence après une rotation complète, d'une station de dépôt.
